# EUROPÄISCHE PATENTSCHRIFT

(11) **EP 2 903 850 B1**
(45) Veröffentlichungstag und Bekanntmachung des Hinweises auf die Patenterteilung: **14.11.2018**
(21) Anmeldenummer: 13762845.9
(22) Anmeldetag: 17.09.2013
(51) Int. Cl.: B60K 26/02, G05G 1/38

(54) **AKTIVES FAHRPEDAL**
ACTIVE ACCELERATOR PEDAL
PÉDALE D'ACCÉLÉRATEUR ACTIVE

(30) Priorität: 08.10.2012 DE 102012218283
(43) Veröffentlichungstag der Anmeldung: 12.08.2015
(73) Patentinhaber: Robert Bosch GmbH, 70442 Stuttgart (DE)
(72) Erfinder: GROSSMANN, Alex, 71229 Leonberg (DE); SIEBER, Udo, 74321 Bietigheim (DE); HENNING, Daniel, 74372 Sersheim (DE); KLOTZBUECHER, Thomas, 73635 Rudersberg (DE)
(86) Internationale Anmeldenummer: PCT/EP2013/069264
(87) Internationale Veröffentlichungsnummer: WO 2014/056684

(56) Entgegenhaltungen:
- EP-A2- 2 492 130
- US-A1- 2003 190 996
- US-A1- 2012 143 441

## Beschreibung

### Gebiet der Erfindung

Die Erfindung betrifft ein aktives Fahrpedal für ein Fahrzeug, ein Steuerungssystem für ein aktives Fahrpedal und ein Fahrzeug.

### Hintergrund der Erfindung

Ein aktives Gas- bzw. Fahrpedal kann dem Fahrer über haptische Signale verschiedene Rückmeldungen geben. Dazu ist das aktive Fahrpedal mit einem geeigneten Aktuator ausgestattet. Die Ansteuerung des Aktuators erfolgt durch eine lokale Aktuatorsteuerung, eine Elektronik, die ebenfalls in das Fahrpedal integriert sein kann und beispielsweise über Signale via einem CAN-Bus getriggert werden kann.

Aus Sicherheitsgründen kann der Aktuator mechanisch so an das Fahrpedal gekoppelt werden, dass nur Kräfte in Pedalrückstellrichtung vom Aktuator auf das Fahrpedal übertragen werden können. Mechanische Lösungen, bei denen das Pedal sich entkoppelt vom Aktuator bewegen kann, erfordern für die Lageregelung des Aktuators neben der Aktuatorposition auch die Pedalposition.

Der Pedalwinkel, d. h. eine aktuelle Stellung eines Fahrpedalhebels, kann mit zwei redundanten Sensorelementen erfasst und der ECU, d. h. einer zentralen Motorsteuerung übermittelt werden. An die beiden redundanten Signale der beiden Sensorelemente werden dabei zu Auswerte- und Diagnosezwecken in der Regel sehr hohe Genauigkeitsanforderungen, beispielsweise bezüglich Messwert, Gleichlauf und Beziehung der beiden Signale zueinander gestellt. Daher ist es nachteilig, mindestens eine der zur zentralen Motorsteuerung gehenden Signalleitungen, die jeweils mit einem Sensorelement verbunden sind, "anzuzapfen", der Aktuatorsteuerung zu übermitteln und dort auszuwerten, da die Aktuatorsteuerung in der Regel mit einer anderen Spannungsversorgung und mit einer anderen Masseanbindung arbeitet und es so zu Signalversätzen, beispielsweise aufgrund eines Masseversatzes kommen kann und somit Gleichlaufanforderungen nicht mehr erfüllt werden.

Daher wird normalerweise ein zweiter Pedalstellungssensor für den Aktuator eingesetzt, der die Signale für die Aktuatorsteuerung liefert, um die oben genannten Nachteile zu vermeiden.

Aus der gattungsgemäßen US 2003/190996 A1 ist ein aktives Fahrpedal bekannt.

### Zusammenfassung der Erfindung

Es ist Aufgabe der Erfindung, ein sicheres und einfach aufgebautes aktives Fahrpedal bereitzustellen.

Diese Aufgabe wird durch den Gegenstand des Anspruch 1 gelöst. Weitere Ausführungsformen der Erfindung ergeben sich aus den abhängigen Ansprüchen und aus der folgenden Beschreibung.
Ein Aspekt der Erfindung betrifft ein aktives Fahrpedal für ein Fahrzeug, beispielsweise einen Pkw, Lkw oder Bus.
Gemäß einer Ausführungsform der Erfindung umfasst das aktive Fahrpedal einen Pedalstellungssensor, der dazu ausgeführt ist, eine Stellung eines Pedalhebels des aktiven Fahrpedals zu erfassen und in ein Pedalstellungssignal umzuwandeln, einen Aktuator, der dazu ausgeführt ist, eine haptische Rückmeldung an den Pedalhebel abzugeben, und eine Aktuatorsteuerung, die dazu ausgeführt ist, den Aktuator zu steuern. Das Pedalstellungssignal kann beispielsweise ein Spannungssignal sein, dessen Höhe mit der Pedalstellung bzw. dem Pedalwinkel in Beziehung steht. Eine haptische Rückmeldung kann eine zusätzliche Kraft sein, die vom Aktuator erzeugt wird, die der Kraft des

Fahrers entgegenwirkt. Eine haptische Rückmeldung auch kann eine Vibration oder eine Bewegung des Pedalhebels sein.

Der Pedalstellungssensor ist dazu ausgeführt, Signale an eine zentrale Motorsteuerung des Fahrzeugs zu übertragen, mit denen die Motorsteuerung den Antrieb des Fahrzeugs steuert. Beispielsweise kann der Pedalstellungssensor über analoge Leitungen mit der zentralen Motorsteuerung verbunden sein. Weiter ist die Aktuatorsteuerung dazu ausgeführt, ein Pedalstellungssignal direkt oder indirekt aus dem Pedalstellungssensor zu empfangen und insbesondere weiterzuverarbeiten.

Das aktive Fahrpedal kann somit lediglich einen Pedalstellungssensor aufweisen (der aber mehrere redundante Sensorelemente umfassen kann), der mit der zentralen Motorsteuerung verbunden ist und der auch Pedalstellungssignale für die Aktuatorsteuerung bereitstellt. Die Erfassung der Pedalposition für die Lageregelung des Aktuators in der Pedalsteuerelektronik bzw. der Aktuatorsteuerung erfordert somit keinen zusätzlichen Sensor und stellt die Rückwirkungsfreiheit auf die redundanten Pedalsensorsignale für die zentrale Motorsteuerung sicher. Daraus ergeben sich Bauraum-, Verdrahtungs- und Kostenvorteile.

Die Aktuatorsteuerung kann eine lokale Aktuatorsteuerung sein. D. h. sie kann sich im selben Gehäuse, auf derselben Platine und/oder in derselben Baugruppe wie der Pedalstellungssensor und/oder die anderen Komponenten des aktiven Fahrpedals befinden.

Gemäß einer Ausführungsform der Erfindung ist die Aktuatorsteuerung über eine direkte Signalverbindung mit dem Pedalstellungssensor verbunden. Eine direkte Signalverbindung kann über Leitungen der gleichen Baugruppe bzw. der Platine, auf der der Sensor und die Aktuatorsteuerung angeordnet sind, erfolgen. Somit kann der Pedalstellungssensor dazu ausgeführt sein, erste Pedalstellungsignale für die zentrale Motorsteuerung über eine erste Leitung bereitzustellen und zweite Pedalstellungssignale über eine zweite Leitung für die Aktuatorsteuerung bereitzustellen.

Gemäß einer Ausführungsform der Erfindung ist die Aktuatorsteuerung über eine Signalverbindung mit dem Pedalstellungssensor verbunden, die dazu ausgeführt ist, Pulsweiten-modulierte Signale zu übertragen. Der Pedalstellungssensor kann dazu ausgeführt sein, Pulsweiten-modulierte Signale zu erzeugen. Bei einem Pulsweiten-modulierten Signal wird nicht der absolute Spannungspegel des Signals ausgewertet, sondern das Tastverhältnis. Toleranzen im Spannungspegel eines Pulsweiten-modulierten Signals können weniger kritisch und damit vernachlässigbar sein.
Gemäß einer Ausführungsform der Erfindung ist die Aktuatorsteuerung über eine SPI (Serial Peripheral Interface)-Verbindung mit dem Pedalstellungssensor verbunden. Alternativ kann die Übermittlung der Pedalstellungssignale via SPI-Bus erfolgen. Der Pedalstellungssensor kann dazu ausgeführt sein, SPI-Signale zu erzeugen.
Insgesamt kann also die erfasste Pedalposition bzw. Pedalstellung über einen im Sensorchip vorhandenen PWM-Kanal oder SPI-Kanal an die Aktuatorsteuerung übermittelt werden, ohne dass es dabei zu Rückwirkungen auf die (eventuell redundanten) Pedalstellungsignale für die zentrale Motorsteuerung kommt (beispielsweise durch Massenversatz).

Der Pedalstellungssensor umfasst zwei Sensorelemente, wobei beide Sensorelemente mit der zentralen Motorsteuerung verbunden sind. Beide Sensorelemente können sich auf einer gemeinsamen Platine oder einem gemeinsamen Chip befinden und/oder redundante Pedalstellungssignale an die zentrale Motorsteuerung liefern. Lediglich eines der beiden Sensorelemente kann mit der Aktuatorsteuerung verbunden sein und/oder die Pedalstellungssignale für die Aktuatorsteuerung liefern.
Ein weiterer Aspekt der Erfindung betrifft ein Steuerungssystem für ein aktives Fahrpedal, so wie es obenstehend und untenstehend beschrieben ist. Das Steuerungssystem umfasst eine zentrale Motorsteuerung und eine lokale Aktuatorsteuerung für den Aktuator des aktiven Fahrpedals. Die zentrale Motorsteuerung ist dazu ausgeführt, ein Pedalstellungssignal von dem Pedalstellungssensor zu empfangen, beispielsweise über eine direkte Verbindung, beispielsweise über eine spannungsführende Leitung, deren Spannungshöhe die Pedalstellung bzw. den Pedalwinkel wiedergibt. Die Motorsteuerung kann dann ein analoges Pedalstellungssignal in ein digitales Pedalstellungssignal umwandeln und weiterverarbeiten.

Gemäß einer Ausführungsform der Erfindung ist die zentrale Motorsteuerung dazu ausgeführt, das Pedalstellungssignal zu verarbeiten und über eine Busverbindung an die Aktuatorsteuerung (beispielsweise in digitaler Form) zu übertragen. Der Bus kann dabei ein CAN-Bus sein, mit dem die zentrale Motorsteuerung und die Aktuatorsteuerung verbunden sind.

Die Aktuatorsteuerung kann das Pedalstellungssignal aus dem Pedalstellungssensor, das von der zentralen Motorsteuerung aufbereitet sein kann, indirekt von der zentralen Motorsteuerung empfangen. Eine direkte (physikalische Verbindung) zwischen dem Pedalstellungssensor und der Aktuatorsteuerung ist nicht notwendig. Auf diese Weise können die Aktuatorsteuerung und der Pedalstellungssensor komplett galvanisch entkoppelt werden. Das Pedalstellungssignal kann somit über ein Bussystem an die Aktuatorsteuerung übertragen werden.

Gemäß einer Ausführungsform der Erfindung ist die zentrale Motorsteuerung dazu ausgeführt, eine zeitliche Ableitung des Pedalstellungssignals zu bilden und/oder das Pedalstellungssignal zu kappen und an die Aktuatorsteuerung übertragen. Im Allgemeinen können Funktionen aus der Aktuatorsteuerung in die zentrale Motorsteuerung verschoben werden.

Gemäß einer Ausführungsform der Erfindung ist die zentrale Motorsteuerung dazu ausgeführt, eine Folge von Pedalstellungsignalen aus dem Pedalstellungssensor zu einem gefilterten Pedalstellungssignal zusammenzufassen und das gefilterte Pedalstellungssignal an die Aktuatorsteuerung zu übertragen.

Ein weiterer Aspekt der Erfindung betrifft ein Fahrzeug mit einem aktiven Fahrpedal bzw. mit einem Steuerungssystem, so wie es obenstehend und untenstehend beschrieben ist.

### Kurze Beschreibung der Figuren

Im Folgenden werden Ausführungsbeispiele der Erfindung mit Bezug auf die beiliegenden Figuren detailliert beschrieben.
Fig. 1 zeigt schematisch ein Fahrzeug mit einem aktiven Fahrpedal gemäß einer Ausführungsform der Erfindung.
Fig. 2 zeigt schematisch ein Steuerungssystem für ein aktives Fahrpedal gemäß einer Ausführungsform der Erfindung.
Fig. 3 zeigt schematisch ein Steuerungssystem für ein aktives Fahrpedal gemäß einer weiteren Ausführungsform der Erfindung.
Fig. 4 zeigt schematisch ein Steuerungssystem für ein aktives Fahrpedal gemäß einer weiteren Ausführungsform der Erfindung.
Fig. 5 zeigt ein Pedalstellungssignal gemäß einer Ausführungsform der Erfindung.
Fig. 6 zeigt ein gekapptes Pedalstellungssignal gemäß einer Ausführungsform der Erfindung.

Grundsätzlich sind identische oder ähnliche Teile mit den gleichen Bezugszeichen versehen.

### Detaillierte Beschreibung von Ausführungsbeispielen

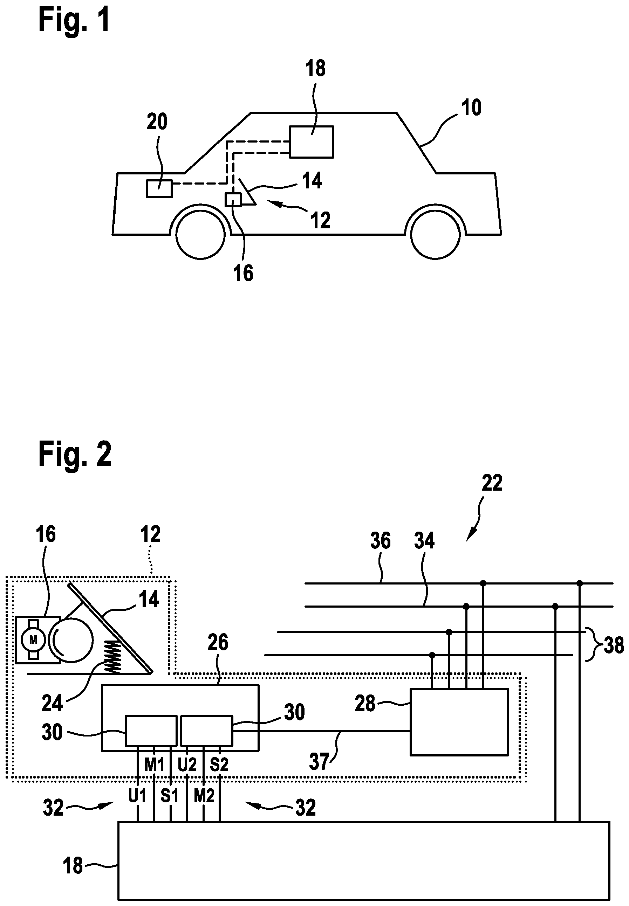

Die Fig. 1 zeigt ein Fahrzeug 10 mit einem aktiven Fahrpedal 12, das einen Pedalhebel 14, der vom Fahrer mit dem Fuß bedient werden kann, und einen Aktuator 16, beispielsweise mit einem Motor, umfasst. Eine zentrale Motorsteuerung 18 erhält Sensorsignale über die Pedalstellung des Pedalhebels 14 von dem aktiven Fahrpedal 12 und steuert einen Antrieb 20, beispielsweise einen Verbrennungsmotor oder einen Elektromotor, des Fahrzeugs 10 entsprechend.

Die Fig. 2 zeigt ein Steuerungssystem 22 für das aktive Fahrpedal 12 detaillierter. Das aktive Fahrpedal 12 umfasst dabei mechanische Komponenten, wie den Pedalhebel 14, eine Rückstellfeder 24 für den Pedalhebel 14 und den Aktuator 16, die zusammen mit elektronischen Komponenten, wie einen Pedalstellungssensor 26 und einer Aktuatorsteuerung 28 in einer gemeinsamen Baugruppe bzw. einem Pedalmodul verbaut sind.

Der Pedalstellungssensor 26 weist zwei redundante Sensorelemente 30, beispielsweise auf einer gemeinsamen Pedalsensorplatine oder einem gemeinsamen Chip, auf. Die beiden Sensorelemente 30 sind jeweils über analoge Verbindungen 32 mit der zentralen Motorsteuerung 18 verbunden. Dabei weist jede der Leitungen eine Leitung U1, U2 zur Spannungsversorgung, eine Leitung M1, M2 für die Masse und eine Leitung S1, S2 für die Pedalstellungsignale auf. Die Pedalposition des Pedalhebels 16 wird über die beiden redundanten Pedalwinkelsensoren 30 linear erfasst. Die beiden Pedalwinkelsensoren 30 werden aus der zentralen Motorsteuerung 18 mit Spannung versorgt und melden den Pedalwinkel an die zentrale Motorsteuerung zurück.

Einer der beiden Sensorelemente 30 ist dazu ausgeführt, ein Pulsweitenmoduliertes Pedalstellungssignal zu erzeugen und auf einem zusätzlichen Ausgang auszugeben. Dieses Pedalstellungssignal wird über eine lokale Leitung 37 des aktiven Fahrpedals 12 an die Aktuatorsteuerung übertragen und dort weiterverarbeitet.

Genauso wie die zentrale Motorsteuerung 18 ist die Aktuatorsteuerung 28 mit einer Masseleitung 34 und einer Batteriespannungsleitung 36 verbunden. Bei einem der beiden vorhandenen Pedalwinkelsensoren 30 ist ein Pulsweitenmodulierter Ausgangskanal vorgesehen und genutzt, um den Pedalwinkel an die Pedalsteuerelektronik 28 des aktiven Teils des aktiven Fahrpedals 12 zu übermitteln.

Weiter kann die Aktuatorsteuerung 28 mit einem CAN-Bus 38 verbunden sein.

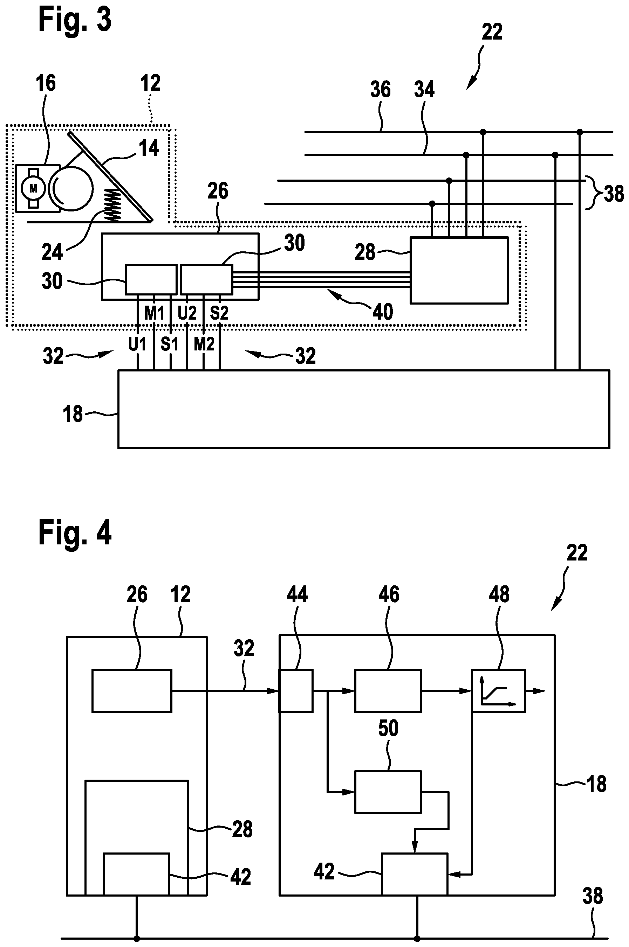

Fig. 3 zeigt schematisch eine weitere Ausführungsform für ein Steuerungssystem 22. Bei der Fig. 3 ist eines der beiden redundanten Sensorelemente 30 dazu ausgeführt, ein SPI-Signal zu erzeugen. Die Aktuatorsteuerung 28 ist über eine lokale SPI-Verbindung 40 (mit vier Leitungen) mit einem der Sensorelemente 30 verbunden. Die Übermittlung des Pedalwinkels an die Pedalsteuerelektronik 28 des aktiven Teils des aktiven Fahrpedals 12 kann über einen SPI-Bus 40 erfolgen.

Fig. 4 zeigt eine weitere Ausführungsform eines Steuerungssystems 22 für ein aktives Fahrpedal 12. Bei dieser Ausführungsform existiert keine direkte (galvanische) Verbindung zwischen dem Pedalstellungssensor 26 und der Aktuatorsteuerung 28.

Sowohl die Aktuatorsteuerung 28 als auch die zentrale Motorsteuerung 18 umfassen einen CAN-Knoten 42, mit dem sie jeweils mit dem CAN-Bus 38 verbunden sind.

Das analoge Pedalstellungssignal aus der Verbindung 32 wird in einem A/D-Wandler 44 der zentralen Motorsteuerung 18 in ein digitales Signal umgewandelt, in einem Filter 46 gefiltert, und in einem Kappungsglied 48 gekappt. Beispielsweise kann die Pedalposition über die Sensorelemente 30 linear erfasst werden und die Kappung des Signals an den Anschlägen des Pedalhebels 14 entfällt und erfolgt stattdessen in der zentralen Motorsteuerung 18.

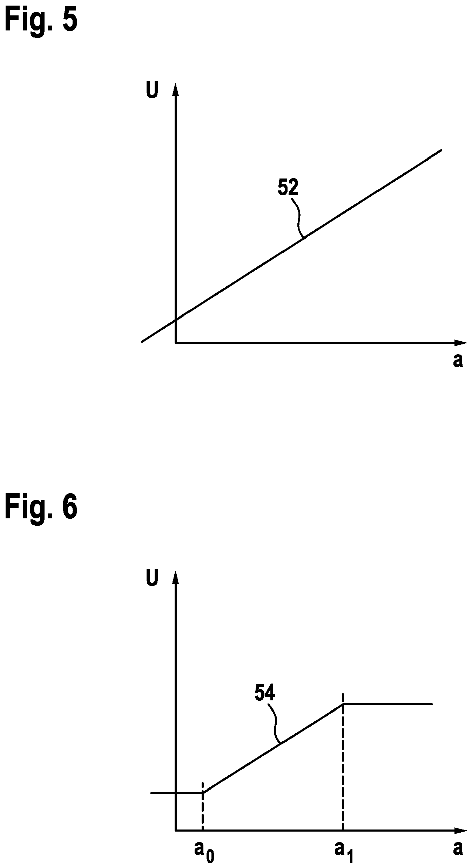

Die Fig. 5 zeigt ein Pedalstellungssignal, so wie es von dem Pedalstellungssensor 26 erzeugt werden kann. In dem Diagramm der Fig. 5 ist nach rechts der Pedalwinkel a und nach oben die Sensorspannung U aufgetragen. Wie aus der Fig. 5 hervorgeht, hängt das (rohe) Pedalstellungssignal 52 linear vom Pedalwinkel a ab.

Die Fig. 6 zeigt ein gekapptes Pedalstellungssignal 54 analog der Fig. 5, das von dem Kappungsglied 48 gebildet werden kann. Zwischen einem minimalen Pedalwinkel a₀ und einem maximalen Pedalwinkel a₁ ist das Pedalstellungssignal 54 linear vom Winkel a abhängig. Außerhalb dieser Grenzen weist es einen minimalen bzw. maximalen konstanten Wert auf.

Wieder mit Bezug auf die Fig. 4 kann die zentrale Motorsteuerung ein Ableitungsglied 50 aufweisen, mit dem eine zeitliche Ableitung des Pedalstellungssignals gebildet werden kann.

Die Erfassung der Pedalstellungssignale in der zentralen Motorsteuerung 18 kann im kleinsten Zeitraster der zentralen Motorsteuerung 18 , beispielsweise jede 1 ms, erfolgen. Da die Übertragungsrate des CAN-Busses 38 ein Vielfaches davon betragen kann, beispielsweise jede 10 ms, können die überzähligen Signalwerte in den 1-ms-Zwischenzeitpunkten genutzt werden, um das Sensorsignal zu filtern und gegebenenfalls zeitliche Ableitungen zu bilden. Das gefilterte Signal wird dann zur internen Weiterverwendung in der zentralen Motorsteuerung 18 gekappt und kann gekappt und/oder ungekappt auf den CAN-Bus 38 gegeben und an die Aktuatorsteuerung 28 im aktiven Fahrpedal 12 weitergeleitet werden. Gegebenenfalls können auch die zeitlichen Ableitungen der Pedalstellungssignale ebenfalls über den CAN-Bus 38 an die Aktuatorsteuerung 28 übertragen werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Aktives Fahrpedal (12) für ein Fahrzeug (10), das aktive Fahrpedal (12) umfassend:
einen Pedalstellungssensor (26), der dazu ausgeführt ist, eine Stellung eines Pedalhebels (14) des aktiven Fahrpedals (12) zu erfassen und in ein Pedalstellungssignal (52) umzuwandeln,
einen Aktuator (16), der dazu ausgeführt ist, eine haptische Rückmeldung an den Pedalhebel (14) abzugeben,
eine Aktuatorsteuerung (28), die dazu ausgeführt ist, den Aktuator (16) zu steuern,
wobei der Pedalstellungssensor (26) dazu ausgeführt ist,
Pedalstellungssignale (52) an eine zentrale Motorsteuerung (18) des Fahrzeugs (10) zu übertragen, mit denen die Motorsteuerung (18) den Antrieb (20) des Fahrzeugs (10) steuert,
wobei die Aktuatorsteuerung (28) dazu ausgeführt ist, ein Pedalstellungssignal (52, 54) aus dem Pedalstellungssensor (26) zu empfangen
**dadurch gekennzeichnet, dass**
der Pedalstellungssensor (26) zwei Sensorelemente (30) umfasst,
wobei beide Sensorelemente (30) mit der zentralen Motorsteuerung (18) verbunden sind,
wobei lediglich eines der beiden Sensorelemente (30) dazu ausgeführt ist, Pedalstellungssignale für die Aktuatorsteuerung (28) zu liefern.

2. Aktives Fahrpedal (12) nach Anspruch 1,
wobei die Aktuatorsteuerung (28) über eine direkte Signalverbindung (37, 40) mit dem Pedalstellungssensor (26) verbunden ist.

3. Aktives Fahrpedal (12) nach Anspruch 1 oder 2,
wobei die Aktuatorsteuerung (28) über eine Signalverbindung (37) mit dem Pedalstellungssensor (26) verbunden ist, die dazu ausgeführt ist, Pulsweiten-modulierte Signale zu übertragen.

4. Aktives Fahrpedal (12) nach einem der vorhergehenden Ansprüche,
wobei die Aktuatorsteuerung (28) über eine SPI-Verbindung (40) mit dem Pedalstellungssensor (26) verbunden ist.

5. Steuerungssystem (22) für ein aktives Fahrpedal (12), das Steuerungssystem umfassend:
ein aktives Fahrpedal (12) nach einem der vorhergehenden Ansprüche, und
eine zentrale Motorsteuerung (18),
wobei die zentrale Motorsteuerung (18) dazu ausgeführt ist, ein Pedalstellungssignal (52) von dem Pedalstellungssensor (26) zu empfangen.

6. Steuerungssystem (22) nach Anspruch 5,
wobei die zentrale Motorsteuerung (18) dazu ausgeführt ist, das Pedalstellungssignal (52) zu verarbeiten und über eine Busverbindung (38) an die Aktuatorsteuerung (28) zu übertragen.

7. Steuerungssystem (22) nach einem der Ansprüche 5 oder 6,
wobei die zentrale Motorsteuerung (18) dazu ausgeführt ist, eine zeitliche Ableitung des Pedalstellungssignals (52) zu bilden und an die Aktuatorsteuerung (28) übertragen.

8. Steuerungssystem (22) nach einem der Ansprüche 5 bis 7,
wobei die zentrale Motorsteuerung (18) dazu ausgeführt ist, das Pedalstellungssignal (54) zu kappen.

9. Steuerungssystem (22) nach einem der Ansprüche 5 bis 8,
wobei die zentrale Motorsteuerung (18) dazu ausgeführt ist, eine Folge von Pedalstellungsignalen aus dem Pedalstellungssensor (26) zu einem gefilterten Pedalstellungssignal zusammenzufassen und das gefilterte Pedalstellungssignal an die Aktuatorsteuerung (28) zu übertragen.

10. Fahrzeug (10) mit einem aktiven Fahrpedal (12) nach einem der Ansprüche 1 bis 4 oder mit einem Steuerungssystem (22) nach einem der Ansprüche 5 bis 9.

## Claims

1. Active accelerator pedal (12) for a vehicle (10), the active accelerator pedal (12) comprising:
a pedal position sensor (26) that is designed to detect a position of a pedal lever (14) of the active accelerator pedal (12) and to convert it into a pedal position signal (52),
an actuator (16) that is designed to output haptic feedback to the pedal lever (14),
an actuator controller (28) that is designed to control the actuator (16),
wherein the pedal position sensor (26) is designed to transmit pedal position signals (52) to a central engine controller (18) of the vehicle (10), with which the engine controller (18) controls the drive (20) of the vehicle (10),
wherein the actuator controller (28) is designed to receive a pedal position signal (52, 54) from the pedal position sensor (26),
**characterized in that**
the pedal position sensor (26) comprises two sensor elements (30),
wherein both sensor elements (30) are connected to the central engine controller (18),
wherein only one of the two sensor elements (30) is designed to provide pedal position signals for the actuator controller (28).

2. Active accelerator pedal (12) according to Claim 1,
wherein the actuator controller (28) is connected to the pedal position sensor (26) by means of a direct signal connection (37, 40).

3. Active accelerator pedal (12) according to Claim 1 or 2,
wherein the actuator controller (28) is connected by means of a signal connection (37) to the pedal position sensor (26) that is designed to transmit pulse width modulated signals.

4. Active accelerator pedal (12) according to any one of the preceding claims, wherein the actuator controller (28) is connected to the pedal position sensor (26) by means of an SPI connection (40).

5. Control system (22) for an active accelerator pedal (12), the control system comprising:
an active accelerator pedal (12) according to any one of the preceding claims, and
a central engine controller (18),
wherein the central engine controller (18) is designed to receive a pedal position signal (52) from the pedal position sensor (26).

6. Control system (22) according to claim 5,
wherein the central engine controller (18) is designed to process the pedal position signal (52) and to transmit the signal to the actuator controller (28) by means of a bus connection (38).

7. Control system (22) according to any one of Claims 5 or 6,
wherein the central engine controller (18) is designed to form a time derivative of the pedal position signal (52) and to transmit the derivative to the actuator controller (28).

8. Control system (22) according to any one of Claims 5 to 7, wherein the central engine controller (18) is designed to cap the pedal position signal (54).

9. Control system (22) according to any one of Claims 5 to 8,
wherein the central engine controller (18) is designed to combine a series of pedal position signals from the pedal position sensor (26) to form a filtered pedal position signal and to transmit the filtered pedal position signal to the actuator controller (28).

10. Vehicle (10) with an active accelerator pedal (12) according to any one of Claims 1 to 4 or with a control system (22) according to any one of Claims 5 to 9.

## Revendications

1. Pédale d'accélérateur active (12) pour un véhicule (10), la pédale d'accélérateur active (12) comprenant :
un capteur de position de pédale (26) qui est conçu pour détecter une position d'un levier de pédale (14) de la pédale d'accélérateur active (12) et le convertir en un signal de position de pédale (52),
un actionneur (16) qui est conçu pour délivrer une rétroaction haptique au niveau du levier de pédale (14),
une commande d'actionneur (28) qui est conçue pour commander l'actionneur (16),
le capteur de position de pédale (26) étant conçu pour transmettre des signaux de position de pédale (52) à une commande de moteur (18) centrale du véhicule (10), avec lesquels la commande de moteur (18) commande la propulsion (20) du véhicule (10),
la commande d'actionneur (28) étant conçue pour recevoir un signal de position de pédale (52, 54) en provenance du capteur de position de pédale (26),
**caractérisée en ce que**
le capteur de position de pédale (26) comporte deux éléments de détection (30),
les deux éléments de détection (30) étant reliés à la commande de moteur (18) centrale,
seul l'un des deux éléments de détection (30) étant conçu pour délivrer des positions de position de pédale pour la commande d'actionneur (28).

2. Pédale d'accélérateur active (12) selon la revendication 1, la commande d'actionneur (28) étant reliée au capteur de position de pédale (26) par le biais d'une liaison de signal (37, 40) directe.

3. Pédale d'accélérateur active (12) selon la revendication 1 ou 2, la commande d'actionneur (28) étant reliée au capteur de position de pédale (26) par le biais d'une liaison de signal (37) qui est conçue pour transmettre des signaux modulés en largeur d'impulsion.

4. Pédale d'accélérateur active (12) selon l'une des revendications précédentes, la commande d'actionneur (28) étant reliée au capteur de position de pédale (26) par le biais d'une liaison SPI (40).

5. Système de commande (22) pour une pédale d'accélérateur active (12), le système de commande comprenant :
une pédale d'accélérateur active (12) selon l'une des revendications précédentes et
une commande de moteur (18) centrale,
la commande de moteur (18) centrale étant conçue pour recevoir un signal de position de pédale (52) de la part du capteur de position de pédale (26).

6. Système de commande (22) selon la revendication 5, la commande de moteur (18) centrale étant conçue pour traiter le signal de position de pédale (52) et le transmettre à la commande d'actionneur (28) par le biais d'une liaison par bus (38).

7. Système de commande (22) selon l'une des revendications 5 ou 6, la commande de moteur (18) centrale étant conçue pour former une dérivée dans le temps du signal de position de pédale (52) et la transmettre à la commande d'actionneur (28).

8. Système de commande (22) selon l'une des revendications 5 à 7, la commande de moteur (18) centrale étant conçue pour écrêter le signal de position de pédale (54).

9. Système de commande (22) selon l'une des revendications 5 à 8, la commande de moteur (18) centrale étant conçue pour regrouper une séquence de signaux de position de pédale provenant du capteur de position de pédale (26) en un signal de position de pédale filtré et transmettre le signal de position de pédale filtré à la commande d'actionneur (28).

10. Véhicule (10) équipé d'une pédale d'accélérateur active (12) selon l'une des revendications 1 à 4 ou d'un système de commande (22) selon l'une des revendications 5 à 9.
